# EUROPÄISCHE PATENTSCHRIFT

(11) **EP 1 048 861 B1**
(45) Veröffentlichungstag und Bekanntmachung des Hinweises auf die Patenterteilung: **02.02.2005**
(21) Anmeldenummer: 00107375.8
(22) Anmeldetag: 05.04.2000
(51) Int. Cl.: F16C 27/06, F16C 33/04, F16F 1/38, B60G 21/055, B60G 7/02

(54) **Drehstabschulterlager**
Torsion bar shoulder bearing
Palier d'épaulement de barre de torsion

(30) Priorität: 29.04.1999 DE 19919573
(43) Veröffentlichungstag der Anmeldung: 02.11.2000
(73) Patentinhaber: WOCO AVS GmbH, 63628 Bad Soden-Salmünster (DE)
(72) Erfinder: Wolf, Franz Josef, 63628 Bad Soden-Salmünster (DE); Schleinitz, Uwe, 63628 Bad Soden-Salmünster (DE); Koczar, Peter, 63607 Wächtersbach (DE)
(74) Vertreter: Weber-Bruls, Dorothée, Dr.

(56) Entgegenhaltungen:
- EP-A- 0 384 799
- DE-A- 19 631 893
- US-A- 4 408 931
- US-A1- 2001 045 694
- PATENT ABSTRACTS OF JAPAN vol. 018, no. 313 (C-1212), 15. Juni 1994 (1994-06-15) & JP 06 065422 A (MEIJI RUBBER & CHEM CO LTD), 8. März 1994 (1994-03-08)

## Beschreibung

Die Erfindung betrifft ein Lager der im Oberbegriff des Patentanspruchs 1 bzw. 2 genannten Art.

Stabilisierungsdrehstäbe sind im Kraftfahrzeugbau verwendete Torsionsfederstäbe, die der Stabilisierung gegen Neigung und Verwindung der Karosserie bei Kurvenfahrt eines Kraftfahrzeugs dienen. Solche Stabilisierungsdrehstäbe, im folgenden kurz "Drehstab" genannt, erstrecken sich in aller Regel über die gesamte Breite des Fahrzeugs und sind im Bereich der Vorderachse und im Bereich der Hinterachse, also zwei solcher Drehstäbe pro Fahrzeug, angeordnet. Solche Drehstäbe zur Neigungsstabilisierung sind also relativ große Bauteile mit einer lichten Längserstreckung in der Größenordnung um 1,5 m.

Solche stabilisierenden Drehstäbe können im Kraftfahrzeugbau nicht Metall-auf-Metall mit dem Fahrwerk einerseits und mit der Karosserie andererseits verschraubt, beispielsweise formschlüssig verschraubt oder vernietet werden. Sie würden bei einer solchen Befestigungsart sämtliche Radgeräusche und Fahrbahngeräusche über die so gebildeten Körperschallbrücken auf die Karosserie und damit auch auf und in die Fahrgastzelle übertragen. Die Drehstäbe müssen daher entkoppelnd, zumindest dämmend gelagert angeordnet werden, um die beschriebene Körperschalleitung zu unterbinden. Zu diesem Zweck werden seit vielen Jahrzehnten an den Drehstabschultern Hülsenlager verwendet. Solche Hülsenlager weisen typischerweise eine starre Außenhülse und koaxial in dieser eine starre Innenhülse, mitunter auch einen Innenbolzen, sowie eine Elastomermanschette, besser gesagt einen Elastomerpuffer, auf, der die beiden ineinanderliegenden starren Hülsen miteinander verbindet und beide Hülsen akustisch voneinander trennt. Dabei trennt diese Unterbrechung der Körperschallbrücke auch die an jeweils einer der beiden ineinanderliegenden Hülsen des Hülsenlagers angreifenden Anschlußelemente des Fahrwerks und der Karosserie. Dabei kann die Karosserie beispielsweise über einen Schraubbolzen an der Innenhülse und der Drehstab über ein Anschlußauge oder eine Lagerschale angeschlossen sein. Alternativ dient die Drehstabschulter als Innenbolzen und ist über eine Innenhülse an das entkoppelnde Elastomer des Hülsenlagers angeschlossen, während die Außenhülse oder auch unmittelbar die äußere Mantelfläche der Gummihülse über eine Lagerschale an der Karosserie angeschlossen ist. Im einzelnen sind für diese Anschlüsse zahllose Anordnungen aus dem Stand der landläufigen Technik bekannt, die die Grundfunktion eines solchen Drehstablagers jedoch nicht verändern.

Sowohl bei großen und schweren Nutzfahrzeugen als auch bei schneller gefahrenen Personenkraftwagen treten an solchen Drehstablagern erhebliche Kräfte auf, und zwar sowohl Rotationskräfte als auch Translationskräfte. Diese funktionsbedingt unvermeidbar auftretenden Kräfte müssen dabei ausschließlich von der Gummimanschette und durch deren Anbindung an die beiden Anschlußelemente des Hülsenlagers, nämlich Innenhülse und Außenhülse, aufgefangen werden. Die Verwendung formschlußschaffender Bauelemente wie beispielsweise die Verwendung von Scheiben oder durch die Anschlußelemente hindurchgreifender Bolzen verbietet sich, da solche das Hülsenlager stabilisierende Bauelemente Körperschallbrücken schaffen würden, die die beabsichtigte Funktion einer Unterbrechung des Körperschallweges außer Kraft setzen würde, die gerade Sinn des Lagers ist.

Dementsprechend muß sich die Entwicklung von Drehstablagern darauf konzentrieren, einen bestmöglichen kraftschlüssigen, stoffschlüssigen oder formschlüsssigen Anschluß der Elastomermanschette an die Innenhülse bzw. den Innenbolzen und die Außenhülse bzw. die außen anschließende Lagerschale oder Lagerbockschale zu schaffen, der in der Lage ist, die hohen auftretenden translatorischen und rotatorischen dynamischen Kräfte aufzunehmen. Gelingt eine solche dauerhaft dynamisch feste Anbindung der Anschlußelemente an die Elastomerhülse nicht, so kommt es bei dynamischer Belastung des Lagers zu Reibgeräuschen und zu einem Knarren durch Relativbewegungen zwischen dem Elastomerblock und dem Anschlußelement, die bis in die Fahrgastzelle des Kraftfahrzeugs hinein störend hörbar sind. Überdies bewirken solche Relativbewegungen zwischen den Anschlußelementen und den entkoppelnden Elastomerpuffer einen merklichen Verschleiß sowohl des Elastomers als auch insbesondere des innenliegenden Anschlußelements. Zu den erzeugten Störgeräuschen kommt also ein Verschleiß der Bauelemente des Hülsenlagers und damit eine Verringerung der Standzeit des Lagers zustande.

An einer befriedigenden Lösung für dieses technische Problem arbeiten Entwickler nicht nur für Drehstablager, sondern auch für verwandte Hülsenlager mit ähnlicher Lageraufgabe seit über einem halben Jahrhundert. Dabei laufen viele der bekannten Lösungsvorschläge darauf hinaus, für die Gummihülse des Lagers eine möglichst hohe Vorspannung zu erzeugen, um dadurch den Reibschluß zwischen der inneren und äußeren axialen Oberfläche der Gummihülse und den Anschlußelementen dauerhaft zu verbessern. Ein Beispiel für solche Versuche der Problemlösung ist aus dem amerikanischen Patent US 2 346 574 aus dem Jahre 1942 ebenso bekannt wie aus der deutschen Offenlegungsschrift DE 16 25 561 A1, dem österreichischen Patent AT 357 882 A oder, aus jüngerer Zeit, aus der europäischen Offenlegungsschrift EP 893 291 A1. Dabei ist beispielsweise aus der zuletzt genannten europäischen Patentschrift EP 893 291 A1 ebenfalls bereits bekannt, den Reibschluß zwischen der Elastomerhülse und den Anschlußelementen durch ein zusätzliches Verkleben zu verbessern.

Weiterhin ist aus dem landläufigen Stand der Technik auch bekannt, den Lagerabschnitt des Drehstabes unmittelbar in ein Formwerkzeug einzulegen und die Elastomerhülse direkt auf den Drehstab aufzuvulkanisieren. Bei diesem Verfahren weist ein solcherart aufgebautes Drehstablager zumindest drehstabseitig zwar zunächst gute Verbundeigenschaften auf, ist jedoch wegen der Sperrigkeit der Drehstäbe mit einem unproduktiven Herstellungsverfahren belastet, das zu hohen Herstellungskosten führt. Außerdem sind solcherart mit anvulkanisierten Elastomerhülsen versehene Drehstäbe verfahrensbedingt korrosionsanfällig.

Schließlich ist es für Hülsenlager mit ähnlicher technischer Problematik, aber mit kleineren und weniger sperrigen Bauteilen bereits auch bekannt, beide zueinander konzentrischen ineinanderliegenden Anschlußteile eines solchen Lagers in ein Formwerkzeug einzulegen, in einem einzigen Spritztakt zu umspritzen und auszuvulkanisieren, so beispielsweise für eine Pendelstütze (DE 196 31 893 A1) oder für eine Lenkerstange an einem Fahrwerksblock (EP 684 404 A1). Der Einsatz dieser Verfahrensweise zur Herstellung von Drehstablagern würde jedoch wegen der Sperrigkeit der Drehstäbe zu Produktionskosten führen, die eine Herstellung von Drehstablagern auf diese Weise von vornherein von einer sinnvollen industriellen Serienfertigung ausschließen würde.

Ausgehend von diesem Stand der Technik liegt der Erfindung das technische Problem zugrunde, ein wirtschaftliches Verfahren zur Herstellung von Drehstablagern der vorstehend erörterten Art zu schaffen, das Relafivbewegungen in der Trennfläche zwischen der Elastomerhülse und den Anschlußelementen auch bei hoher Lagerbelastung zuverlässig langfristig ausschließt und damit zu "ruhigen" Drehstablagern mit verlängerter Lebensdauer führt.

Die Erfindung löst dieses technische Problem durch ein Verfahren zur Herstellung von Drehstablagern, genauer Drehstabschulterlagern, das die im Anspruch 1 genannten Merkmale, genauer die im Anspruch 2 genannten Merkmale, aufweist.

Das Verfahren gemäß der Erfindung, das nicht nur zum Herstellen von Schulterlagern für Drehstäbe, sondern prinzipiell auch für alle ähnlich aufgebauten Hülsenlager vorteilhaft einsetzbar ist, weist in seiner Grundstruktur vier Verfahrensschritte auf, nämlich (i) das Herstellen der Feder des Hülsenlagers in konventioneller Weise als Elastomerformteil; (2) das Vorbehandeln der mit dem in dem Verfahrensschritt (1) hergestellten Formteil zu verbindenden Oberflächen der aus Metall oder Kunststoff bestehenden Anschlußteile, ggf. nach üblichem Entfetten und Ätzen, mit einem ebenfalls konventionellen Haftsystem, vorzugsweise mit einem aus Primer und Cover bestehenden Zweikomponentenhaftsystem; (3) das Aufschieben des Formteils auf die vorbehandelte Oberfläche des innenliegenden Anschlußteils, sei dies nun ein Bolzen, ein Vollstab oder eine Hülse, und Einsetzen des Formteils in das außenliegende, genauer, außenumgebende Anschlußteil in der Weise, daß das ein innenliegendes Anschlußteil und ein außenliegendes Anschlußteil tragende Elastomerformteil einer Vorspannung vorzugsweise im Bereich von 5 bis 10 % unterliegt; dabei versteht sich von selbst, daß die Reihenfolge des Verbindens mit den Anschlußteilen auch umgekehrt werden kann, also das Formteil zunächst in die außenliegende Hülse oder Lagerschelle eingesetzt werden kann und dann erst das innere Anschlußelement eingedrückt oder eingeschossen wird; (4) das dann vollständige Ausvulkanisieren der Elastomerlagerfeder in dem im zusammengebauten Lager unter Vorspannung stehenden Elastomerfeder-Formteils.

Ausgestaltungen der Erfindung sind Gegenstand der Unteransprüche.

Im Ergebnis wird nach diesem Verfahren ein Hülsenlager erhalten, bei dem die Elastomerfeder zwischen der Innenhülse und der Außenhülse unter extrem festem Stoffschluß einvulkanisiert und anvulkanisiert ist. Insofern gleicht das nach dem Verfahren der Erfindung hergestellte Hülsenlager der beispielsweise aus der eingangs genannten deutschen Offenlegungsschrift DE 196 31 893 A1 bekannten Pendelstütze, zeichnet sich jedoch gegenüber dieser durch das im Verfahrensschritt (2) verwendete Haftsystem eine deutlich festere und dauerhaft festere Anbindung des Elastomers an den Hülsenwerkstoff auf. Dies allein deshalb, weil der Haftvermittler jeweils spezifisch für den Werkstoff des jeweils eingesetzten Anschlußstücks ausgewählt werden kann.

Der eigentliche und wesentliche Vorteil eines nach dem Verfahren der Erfindung hergestellten Hülsenlagers im Vergleich zu dem ähnlich aufgebauten Pendelstützenlager gemäß DE 196 31 893 A1 liegt jedoch darin, daß die Herstellung von Hülsenlagern nach dem Verfahren der Erfindung nur Bruchteile der Herstellungskosten erfordert, die zur Herstellung der bekannten Pendelstütze aufgebracht werden müssen. Während zur Herstellung der Pendelstütze nach dem Stand der Technik ein teures, weil großes Formwerkzeug erforderlich ist, in das die Anschlußteile der Pendelstütze als Einlegteile eingebracht werden, während dann anschließend der diese Anschlußteile einschließende und umgebende Elastomerkörper in einem einzigen Vulkanisationsvorgang, d.h. Spritztakt mit anschließendem Anvulkanisieren, erfolgt (DE 196 31 893 A1 Spalte 5 letzter Absatz). Im Gegensatz dazu kann das Elastomerfeder-Formteil ohne jegliche Einlegteile aus einfachen und konventionellen Formwerkzeugen, ggf. sogar durch Extrudieren, hergestellt werden. Dabei brauchen bei dem anschließenden Zusammenbau des Hülsenlagers nur geringe Vorspannkräfte zur Erzeugung einer Vorspannung von meist unter 10 % eingesetzt zu werden. Wiederum im Gegensatz zu anderen bekannten Verfahren, bei denen vorgefertigte Elastomerformteile beim Zusammenbau eines Hülsenlagers gewaltigen Kräften unterworfen werden müssen, um selbst bei Verwendung von Klebern ausreichend fest haftende Anschlüsse zwischen dem Federelement und den Anschlußteilen herstellen zu können.

Für den Erfolg des Verfahrens der Erfindung ist im Verfahrensschritt 1 ausschlaggebend, daß das in konventioneller Weise im Vulkanisationsformwerkzeug hergestellte Elastomerformteil im Gegensatz zur üblichen Praxis nicht vollständig ausvulkanisiert, sondern bereits vor dem Erreichen dieses Zustandes entformt wird. Zweckmäßigerweise erfolgt dies zu einem Zeitpunkt, zu dem das Elastomer bereits so weit vulkanisiert ist, daß die Elastomermatrix keine Blasen mehr aufweist. Das für die Durchführung des Verfahrens gemäß der Erfindung benötigte Vulkanisationsformwerkzeug kann also nicht nur kleiner und einfacher ausgelegt sein, sondern ermöglicht durch die kleineren Formteile, die ohne Einlegteile bleiben und überdies nicht vollständig ausvulkanisiert zu werden brauchen, wesentlich kürzere Taktzeiten als sie beispielsweise für die Herstellung einer Pendelstütze mit Einlegeteilen nach dem Stand der Technik erforderlich sind. Dieser Vorteil bleibt auch bis zum Abschluß des Herstellungsverfahrens nach der Erfindung bestehen, da das nach dem Verfahrensschritt 4 abschließende endgültige und vollständige Ausvulkanisieren des Hülsenlagers nicht mehr in einem teuren und aufwendigen Vulkanisationswerkzeug, sondern in einfachen Temperölen, meist einem Durchlauf-Tunnelofen, also mit Minimalkosten, erfolgt. Dieses abschließende Austempern im Temperofen wird vorzugsweise in einem Temperaturbereich von ungefähr 120 °C bis 150 °C durchgeführt und wird in der Regel Verweilzeiten im Bereich von ungefähr 30 min erfordern. Die Versuchspraxis hat gezeigt, daß für gebräuchliche Drehstab-Lagerfedern Verweilzeiten von ungefähr 20 bis 40 min zum vollständigen Aushärten ausreichen.

Die Erfindung ist im folgenden anhand von Ausführungsbeispielen in Verbindung mit der Zeichnung näher erläutert. Es zeigen:
- Fig 1: ein nach dem Verfahren der Erfindung hergestelltes Hülsenlager im Axialschnitt; und
- Fig. 2: ebenfalls im Axialschnitt ein nach dem Verfahren der Erfindung hergestelltes Drehstabschulterlager für die Neigungsstabilisierung eines Kraftfahrzeugs.

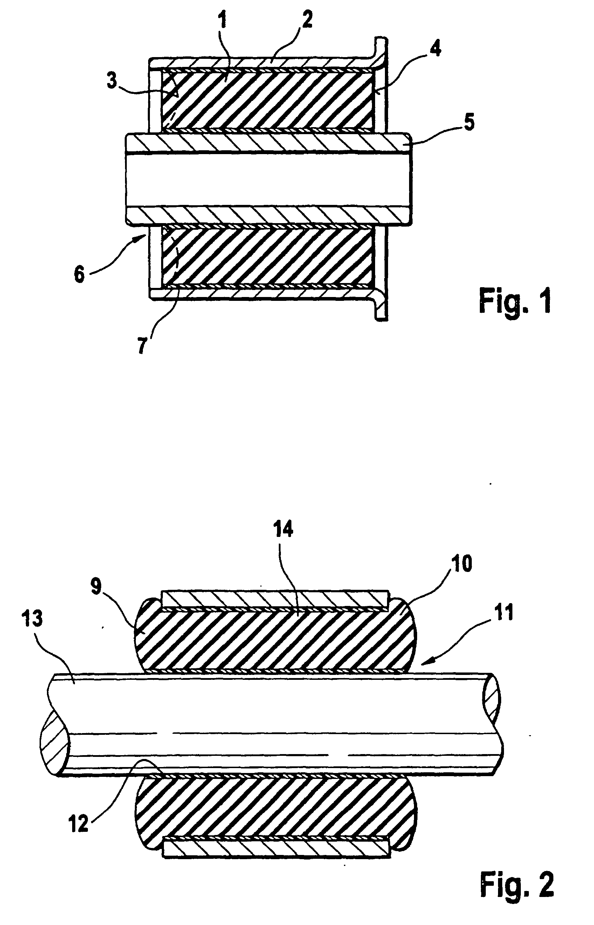

Zur Herstellung des in Fig. 1 gezeigten Hülsenlagers wird zunächst ein hülsenförmiges oder manschettenförmiges Federelement 1 in einem herkömmlichen Vulkanisationswerkzeug hergestellt. Das Formteil ist dabei so dimensioniert und konfiguriert, daß es nach dem Entformen im unverspannten Zustand einen Außendurchmesser aufweist, der geringfügig größer als der lichte Innendurchmesser der außenliegenden Anschlußhülse 2 des Hülsenlagers ist. Außerdem weist das zylindrische Formteil im unverspannten entformten Zustand auf beiden Stirnseiten eine flache umlaufende ringförmige Rinne 3 auf, die so bemessen ist, daß nach dem Einspannen des noch nicht vollständig ausvulkanisierten Formteils 1 in die außenliegende Anschlußhülse 2 im wesentlichen plane Stirnseitenflächen 4 entstehen.

Nach dem vorspannenden Einsetzen des noch nicht vollständig ausvulkanisierten Elastomerformteils 1 in die außenliegende Anschlußhülse 2 wird eine innenliegende Metallhülse 5 in eine vorgeformte durchgehende Zentralbohrung 6 des Elastomerformteils 1 eingedrückt. Dabei ist der Innendurchmesser der Bohrung 6 so bemessen, daß er nach dem Einspannen des Formteils 1 in die außenliegende Anschlußhülse ein effektives lichtes Maß aufweist, daß er in dem Maße kleiner als der Außendurchmesser der innenliegenden Anschlußhülse 5 ist, daß in dem in Fig. 1 gezeigten zusammengebauten Zustand des Lagers das Elastomer des Formteils 1 eine Vorspannung im Bereich von 5 bis 10 % aufweist und die stirnseitigen Rinnen 3eine zumindest angenähert plane Kreisringfläche 4 bilden.

Alle Flächen der Anschlußteile 2,5, die mit dem eingespannten Elastomerformteil 1 in Berührung stehen, werden zuvor mit einem aus Primer und Cover bestehenden handelsüblichen Haftsystem 7 überzogen. Das Elastomerfeder-Formteil des in der in Fig. 1 dargestellten Art zusammengebauten Hülsenlagers wird dann mit einer Verweilzeit von 30 min in einen Durchlauftemperofen bei 130 °C vollständig ausvulkanisiert.

Bei dem in Fig. 2 gezeigten zweiten Ausführungsbeispiel eines nach dem Verfahren der Erfindung hergestellten Lagers handelt es sich um ein typisches Drehstabschulterlager. Das Elastomerfederformteil 9 ist ein nach dem Entformen im entspannten Zustand zylindrisches Formteil, das an seinen beiden Stirnseiten angeformte kreisringförmige Bundstege 10 trägt.

Das mit einer im entspannten Zustand unterdimensionierten Zentralbohrung 11 versehene Elastomerfeder-Formteil 9 wird dann auf den mit dem Haftsystem 12 beschichteten Abschnitt eines Drehstabs 13 unter vorspannender Aufweitung der Zentralbohrung 11 aufgeschoben. Anschließend wird, ebenfalls vorspannend, eine Lagerschelle 14 auf die zylindrische Außenfläche des Formteils 9 ebenfalls vorspannend aufgespannt, wobei auch die mit dem Elastomerformteil in Berührung stehende Fläche der Lagerschelle 14 mit dem Haftsystem 12 beschichtet ist.

Das auf diese Weise erhaltene und zusammengebaute in Fig. 2 dargestellte Drehstabschulterlager wird dann zum abschließenden Ausvulkanisieren des Elastomerformteils 9 40 min bei 125 °C durch einen Temperofen geführt. Gegenüber dem in Fig. 2 gezeigten Zustand des Lagers zeigt das ausvulkanisierte Lager praktisch keine konfigurativen Veränderungen.

Im Gegensatz zu dem in Fig. 1 gezeigten Ausführungsbeispiel eines vielseitig einsetzbaren Hülsenlagers, bei dem die Vorspannungsverformungen vorab durch eine entsprechende Konfiguration des Elastomerformteils kompensieren berücksichtigt wurden, ist auf eine solche Korrektur bei dem in Fig. 2 gezeigten Ausführungsbeispiel eines Drehstabschulterlagers verzichtet worden. Dadurch entstehen bei einer Vorspannung im Bereich von deutlich unter 15 %, vorzugsweise im Bereich von um oder wenig unter 10 % die in der Fig. 2 (nicht maßstäblich) gezeigte und durch die Vorspannung bewirkten Verformungskonturen. Dies ermöglicht beispielsweise ein axiales Fixieren des in Fig. 2 gezeigten Schulterlagers durch Beilegscheiben oder Bundscheiben, ohne daß durch diese Bauelemente eine Körperschallbrücke vom Drehstab 13 zur Lagerschelle 14 entsteht.

## Patentansprüche

1. Verfahren zum Herstellen von Hülsenlagern mit einer hülsenförmigen oder manschettenförmigen Elastomerfeder zwischen einer aussenliegenden Anschlusshülse oder Lagerschelle und einer koaxial zu dieser innenliegenden Anschlusshülse oder einem innenliegenden Anschlussbolzen, insbesondere zum Herstellen eines Drehstabschulterlagers für Kraftfahrzeuge,
**gekennzeichnet durch**
folgende Verfahrensschritte:
(1) Herstellen der Elastomerfeder in an sich bekannter Weise als Elastomerformteil, Elastomer-Metall-Formteil oder Elastomer-Kunststoff-Formteil in einem Vulkanisations-Formwerkzeug, jedoch mit der Massgabe, dass das Formteil entformt wird, wenn es einerseits blasenfrei vernetzt, andererseits aber noch nicht vollständig ausvulkanisiert ist, d. h., wenn das Elastomer noch freie Vulkanisationsvalenzen aufweist;
(2) Vorbehandeln der mit dem Formteil zu verbindenden Oberflächen der Anschlussteile mit einem Haftsystem;
(3) Aufschieben des Formteils auf das innenliegende Anschlussteil und Einsetzen des Formteils in das aussenliegende Anschlussteil mit der Massgabe, dass das Formteil abschliessend unter mässiger Vorspannung zwischen den beiden Anschlussteilen eingespannt ist; und
(4) vollständiges Ausvulkanisieren des unter Vorspannung stehenden Formteils in und mit dem zusammengesetzten Lager.

2. Verfahren zum Herstellen eines Drehstabschulterlagers für Kraftfahrzeuge mit einer hülsenförmigen Elastomerfeder zwischen einer aussenliegenden Lagerschelle oder einem aussenliegenden Lagerauge und einem koaxial zu diesen innenliegenden Schulterabschnitt eines Drehstabes,
**gekennzeichnet durch**
folgende Verfahrensschritte:
(1) Herstellen der Elastomerfeder in an sich bekannter Weise als Elastomerformteil, Elastomer-Metall-Formteil oder Elastomer-Kunststoff-Formteil in einem Vulkanisations-Formwerkzeug, jedoch mit der Massgabe. dass das Formteil entformt wird, wenn es einerseits blasenfrei vernetzt, andererseits aber noch nicht vollständig ausvulkanisiert ist, d.h., wenn das Elastomer noch freie Vulkanisationsvalenzen aufweist;
(2) Vorbehandeln der mit dem Formteil zu verbindenden Oberflächen der Anschlussteile mit einem 2-Komponenten-Haftsystem;
(3) Aufschieben des Formteils auf den vorbehandelten Schulterabschnitt des Drehstabes und Einsetzen des auf den Drehstab aufgesteckten Elastomerformteils in eine aussenliegende Lagerschelle oder in ein aussenliegendes Lagerauge mit der Massgabe, dass das Formteil abschliessend unter mässiger Vorspannung zwischen den beiden Anschlussteilen eingespannt ist; und
(4) vollständiges Ausvulkanisieren des unter Vorspannung stehenden Formteils in dem bereits betriebsbereit zusammengebauten Drehstabschulterlager.

3. Verfahren nach einem der Ansprüche 1 oder 2,
**gekennzeichnet durch**
ein Entformen des Formteils im Verfahrensschritt (1), solange das Elastomer noch 10 bis 25% freie Vulkanisationsvalenzen aufweist.

4. Verfahren nach einem der Ansprüche 1 bis 3,
**gekennzeichnet durch**
ein Vorbehandeln der im Verfahrensschritt (2) mit dem Formteil zu verbindenden Oberflächen der Anschlussteile mit einem aus einem Primer und einem Cover bestehenden 2-Komponenten-Haftsystem.

5. Verfahren nach einem der Ansprüche 1 bis 4,
**gekennzeichnet durch**
ein Ausvulkanisieren im Verfahrensschritt (4) unter einer Vorspannung der Elastomerfeder von 5 bis 10%.

6. Verfahren nach einem der Ansprüche 1 bis 5,
**gekennzeichnet durch**
ein Ausvulkanisieren im Verfahrensschritt (4) bei einer Temperatur im Bereich von 120 °C bis 150 °C.

7. Verfahren nach einem der Ansprüche 1 bis 6,
**gekennzeichnet durch**
ein Ausvulkanisieren des Lagers im Verfahrensschritt (4) in einem Temperofen.

## Claims

1. A method of producing sleeve bearings comprising a sleeve-like or strap-like elastomer spring between an outer connecting sleeve or bearing clip or strap and a coaxial inner connecting sleeve or inner connecting pin, particularly for producing torsion-bar shoulder bearings for motor vehicles,
**characterised by** the following process steps:
(1) production of the elastomer spring in known manner in the form of an elastomer moulding or elastomer-metal moulding or elastomer-plastic moulding in a vulcanisation mould, subject to the proviso that the moulding is removed from the mould when it is bubble-free and cross-linked but has still not completely vulcanised, i.e. when the elastomer still contains free vulcanisation valencies;
(2) pretreatment with an adhesive system of the surfaces of the part for connecting to the moulding;
(3) sliding the moulding on to the inner connecting part and insertion of the moulding into the outer connecting part, subject to the proviso that the moulding part is finally clamped under moderate prestress between the two connecting parts, and
(4) complete vulcanisation of the prestressed moulding in and with the composite bearing.

2. A method of producing a torsion-bar shoulder bearing for motor vehicles comprising a sleeve-like elastomer spring between an outer bearing strap or clip or eyelet and a coaxial inner shoulder portion of a torsion bar,
**characterised by** the following process steps:
(1) production of the elastomer spring in known manner in the form of an elastomer moulding or elastomer-metal moulding or elastomer-plastic moulding in a vulcanisation mould, subject to the proviso that the moulding is removed from the mould when it is bubble-free and cross-linked but has not yet completely vulcanised, i.e. when the elastomer still has free vulcanisation valencies;
(2) treatment with a two-component adhesive system of the surfaces of the part for connecting to the moulding;
(3) sliding the moulding on to the pretreated shoulder portion of the torsion bar and insertion of the elastomer moulding slid on to the torsion bar into an outer bearing strap or clip or into an outer bearing eyelet, subject to the proviso that the moulding is finally clamped under moderate prestress between the two connecting parts, and
(4) complete vulcanisation of the prestressed moulding in the torsion-bar shoulder bearing, which has already been assembled ready for operation.

3. A method according to claim 1 or 2,
**characterised by** removal of the moulding in process step (1) as long as the elastomer still has 10 to 25% free vulcanisation valencies.

4. A method according to any of claims 1 to 3,
**characterised by** pretreatment with a two-component adhesive system comprising a primer and a cover of the surfaces of the part for connecting to the moulding in process step (2).

5. A method according to any of claims 1 to 4,
**characterised by** complete vulcanisation in process step (4) when the prestress on the elastomer spring is 5 to 10%.

6. A method according to any of claims 1 to 5,
**characterised by** complete vulcanisation in process step (4) at a temperature in the range from 120 to 150°C.

7. A method according to any of claims 1 to 6,
**characterised by** complete vulcanisation of the bearing in process step (4) in a tempering furnace.

## Revendications

1. Procédé de fabrication de paliers à douille, comprenant un ressort en élastomère, en forme de douille ou en forme de manchette, entre une douille de raccordement ou un collier de palier et une douille de raccordement, coaxialement intérieure à cette douille de raccordement ou collier de palier, ou un boulon de raccordement intérieur, en particulier pour fabrication d'un palier d'épaulement de barre de torsion pour des véhicules automobiles,
**caractérisé par**
les étapes de procédé suivantes :
(1) fabrication du ressort en élastomère, de manière connue en soi, sous la forme de pièce moulée en élastomère, de pièce moulée élastomère-métal, ou de pièce moulée élastomère-matière synthétique, dans un outil de moulage-vulcanisation, cependant avec indication selon laquelle la pièce moulée est démoulée lorsque, d'une part, elle est réticulée sans soufflure et que, d'autre part, cependant, elle n'est pas encore complètement vulcanisée, c'est-à-dire lorsque l'élastomère présente encore des valences de vulcanisation libres ;
(2) pré-traitement des surfaces, à relier à la pièce moulée, des pièces de raccordement, avec un système adhésif
(3) enfilage de la pièce moulée sur la pièce de raccordement intérieure et insertion de la pièce moulée dans la pièce de raccordement extérieure, avec indication selon laquelle la pièce moulée, enfin, est enserrée, sous l'effet d'une pré-contrainte modérée, entre les deux pièces de raccordement ; et
(4) vulcanisation complète de la pièce moulée placée sous pré-contrainte dans et avec le palier assemblé.

2. Procédé de fabrication d'un palier d'épaulement de barre de torsion pour des véhicules automobiles, avec un ressort en élastomère en forme de douille, entre un collier de palier extérieur ou un oeillet de palier extérieur, et un tronçon d'épaulement, intérieur coaxialement à celui-ci, d'une barre de torsion,
**caractérisé par**
les étapes de procédé suivantes :
(1) fabrication du ressort en élastomère, de manière connue en soi, sous forme de pièce moulée en élastomère, de pièce moulée élastomère-métal ou de pièce moulée élastomère-matière synthétique, dans un outil de moulage-vulcanisation, cependant avec indication selon laquelle la pièce moulée est démoulée lorsqu' elle est, d'une part, réticulée sans aucune soufflure et que, d'autre part, cependant, elle n'est pas encore complètement vulcanisée, c'est-à-dire lorsque l'élastomère présente encore des valences de vulcanisation libres ;
(2) pré-traitement des surfaces, à relier à la pièce moulée, des pièces de raccordement, avec un système adhésif à deux composants ;
(3) enfilage de la pièce moulée sur le tronçon d'épaulement pré-traité de la barre de torsion et insertion de la pièce moulée en élastomère enfilée sur la barre de torsion dans un collier de palier extérieur ou un oeillet de palier extérieur, avec indication selon laquelle la pièce moulée est enfin enserrée, sous l'effet d'une pré-contrainte modérée, entre les deux pièces de raccordement ; et
(4) vulcanisation complète de la pièce moulée placée sous pré-contrainte dans le palier d'épaulement de barre de torsion, assemblé et déjà prêt à fonctionner.

3. Procédé selon l'une des revendications 1 ou 2,
**caractérisé par**
un démoulage de la pièce moulée à l'étape de procédé (1), tant que l'élastomère présente encore de 10 à 25 % de valences de vulcanisation libres.

4. Procédé selon l'une des revendications 1 à 3,
**caractérisé par**
un pré-traitement des surfaces, à relier à la pièce moulée à l'étape de procédé (2), des pièces de raccordement avec un système adhésif à deux composants, formé d'un primer et d'un cover.

5. Procédé selon l'une des revendications 1 à 4,
**caractérisé par**
une vulcanisation à l'étape de procédé (4), sous une pré-contrainte de 5 à 10 %, du ressort en élastomère.

6. Procédé selon l'une des revendications 1 à 5,
**caractérisé par**
une vulcanisation à l'étape de procédé (4), à une température dans la plage de 120°C à 150°C.

7. Procédé selon l'une des revendications 1 à 6,
**caractérisé par**
une vulcanisation du palier à l'étape de procédé (4), dans un four de revenu.
